Europäisches Patentamt

European Patent Office

Office européen des brevets

(19)

(11) Numéro de publication: **0 232 671**
**B1**

## FASCICULE DE BREVET EUROPEEN

(12)

(45) Date de publication du fascicule du brevet:
**07.02.90**

(51) Int. Cl.⁴: **F16L 21/02**

(21) Numéro de dépôt: **86470007.5**

(22) Date de dépôt: **19.12.86**

(54) **Joint d'étancheité pour le raccordement de deux elements de canalisation, l'un à bout uni, l'autre à emboîtement.**

(30) Priorité: **03.01.86 FR 8600059**

(43) Date de publication de la demande:
**19.08.87 Bulletin 87/34**

(45) Mention de la délivrance du brevet:
**07.02.90 Bulletin 90/6**

(84) Etats contractants désignés:
**DE ES GB IT**

(56) Documents cités:
**FR-A- 2 094 278**
**FR-A- 2 358 610**
**US-A- 2 401 379**
**US-A- 2 749 154**

(73) Titulaire: **PONT-A-MOUSSON S.A., 91, Avenue de la Libération, F-54017 Nancy(FR)**

(72) Inventeur: **Vigneron, Pierre, 7 rue Saint Pierre, F-54700 Maidieres(FR)**

(74) Mandataire: **Puit, Thierry et al, c/o Centre de Recherches de Pont-à-Mousson B.P. 28, F-54703 Pont-à-Mousson Cedex(FR)**

**Description**

La présente invention est relative à un joint d'étanchéité pour le raccordement de deux éléments de canalisation, l'un à bout uni, l'autre à emboîtement.

La présente invention a particulièrement pour objet un joint d'étanchéité pour le raccordement d'un tuyau de grand diamètre, supérieur à 800 mm, à bout mâle et emboîtement, avec une pièce telle que, par exemple, un coude à deux emboîtements, un té de branchement à deux emboîtements, ou encore un manchon à deux emboîtements.

On connaît ainsi, par le brevet FR-A 2 094 278, un joint d'étanchéité pour le raccordement de deux éléments de canalisation, l'un à bout uni, l'autre à emboîtement, avec interposition d'une garniture d'étanchéité comprimée radialement par la face interne de l'emboîtement et la face externe du bout uni.

Dans ce type de joint, la garniture d'étanchéité n'est introduite entre le bout mâle et l'emboîtement qu'après la mise en place dudit bout mâle dans ledit emboîtement. Ceci permet donc une introduction du bout mâle dans l'emboîtement sans grand effort.

Après la pose de la garniture d'étanchéité, la mise en place d'un élément de fermeture de l'emboîtement, constitué par exemple par une bague filetée ou par une bague à baïonnette ou encore par une contre-bride accrochée à la face externe de l'emboîtement, empêche l'expulsion de la garniture d'étanchéité hors de l'emboîtement lors de la mise en pression de la canalisation.

Dans ce type de joint, la garniture d'étanchéité présente, à l'état libre, un diamètre interne voisin du diamètre externe du bout mâle sur lequel elle est placée. Elle ne présente donc, une fois posée sur le bout mâle, et avant d'être comprimée par l'emboîtement, aucune contrainte.

Il est ainsi nécessaire, dans ce type de joint, de mettre en jeu des efforts d'introduction de la garniture entre le bout mâle et l'emboîtement qui peuvent être très importants, voire totalement dissuasifs, et qui, en tout cas, nécessitent l'utilisation d'un matériel complexe et lourd.

Par ailleurs, une fois la garniture posée, il est nécessaire, soit que la face interne de l'emboîtement soit filetée, soit qu'une contre-bride présentant de nombreux boulons soit mise en place. Dans les deux cas, la pose sur chantier d'un tel joint devient très difficile voire impossible, compte tenu, d'une part, de la taille des pièces à manipuler dans le cas de canalisations de diamètre supérieur à 800 mm et, d'autre part, des efforts de serrage que cela entraîne.

La présente invention a donc pour but de remédier à ces problèmes de pose.

On connaît par le document US-A 2 401 379 un dispositif selon le préambule de la revendication 1 de la présente demande.

Les caractéristiques et avantages ressortiront à la suite de la description qui va suivre faite en référence aux dessins annexés donnés uniquement à titre d'exemples non limitatifs et parmi lesquels:

– la Fig. 1 est une vue en coupe du joint selon l'invention;
– la Fig. 2 est une vue en coupe radiale de la garniture du joint d'étanchéité selon l'invention;
– la Fig. 3 est une vue en coupe radiale de la bague métallique du joint d'étanchéité selon l'invention;
– la Fig. 4 est une vue de la contre-bride interne du joint d'étanchéité selon l'invention;
– la Fig. 5 est une vue en coupe radiale de la contre-bride interne du joint selon l'invention;
– la Fig. 6 est une vue en perspective d'une des deux pièces de blocage de la contre-bride interne du joint selon l'invention.

<u>Description</u>

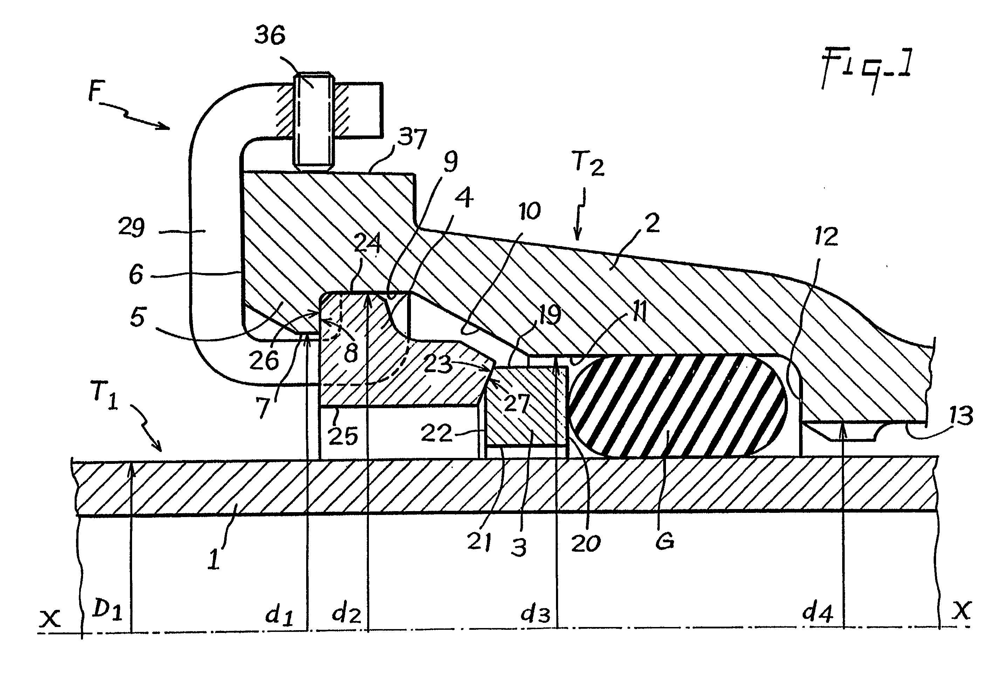

Suivant l'exemple de réalisation représenté Fig. 1, le joint d'étanchéité selon l'invention est constitué d'un bout mâle 1, d'un élément tubulaire T1, d'axe X–X et de diamètre D1, d'un emboîtement 2 d'un autre élément tubulaire T2, d'axe X-X, avec interposition d'une garniture d'étanchéité G, et de moyens servant à éviter l'expulsion de la garniture d'étanchéité G constitués d'une bague 3 et d'une contre-bride interne à l'emboîtement 4.

L'emboîtement 2 présente à son extrémité d'entrée un collet 5, constitué par une face plane 6 d'extrémité de l'emboîtement 2, perpendiculaire à l'axe X-X, une face 7 interne cylindrique d'axe X-X et de diamètre d1, se raccordant à la surface 6, et une surface 8, perpendiculaire à l'axe X-X, interne à l'emboîtement 2, plane et se raccordant à la face 7.

Le collet 5 est prolongé intérieurement vers le fond de l'emboîtement par une face 9 cylindrique d'axe X-X et de diamètre d2 supérieur à d1. Cette face 9 est reliée, par une surface tronconique 10 d'axe X-X convergente vers le fond de l'emboîtement 2, à une face cylindrique 11 d'axe X-X, de diamètre d3 inférieur à d2 et à d1, limitée à son extrémité située du côté du fond de l'emboîtement 2 par une face 12 reliée à une face 13 cylindrique de diamètre d4 inférieur à d1.

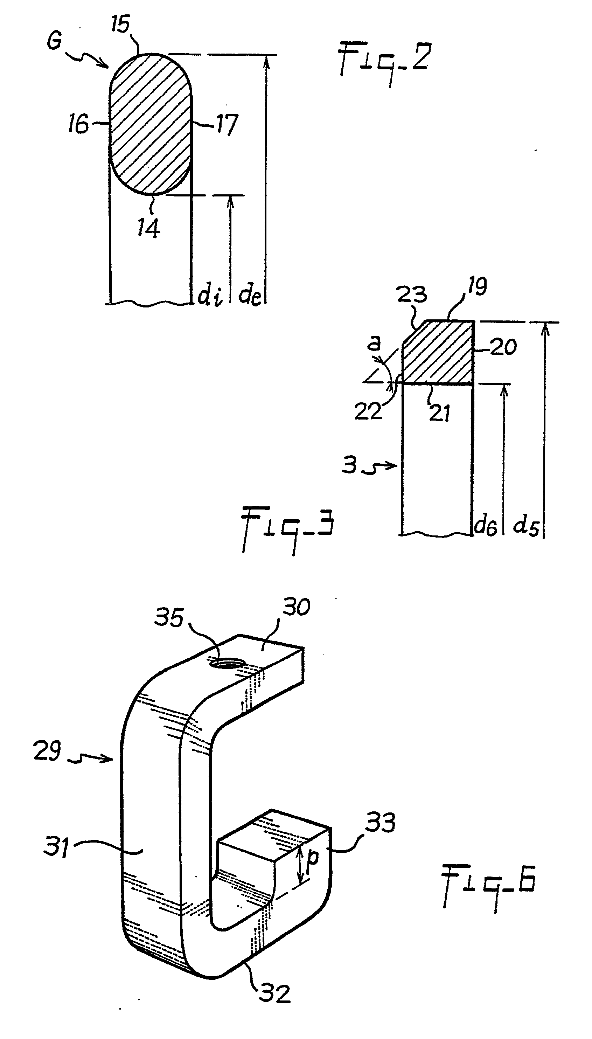

La garniture G peut avoir, à l'état libre, une section méridienne circulaire, la garniture G étant alors une simple garniture d'étanchéité torique. Selon un autre mode de réalisation de l'invention, la garniture G peut présenter une section méridienne constituée de deux surfaces annulaires interne 14 et externe 15 bombées raccordées par deux surfaces planes 16 et 17 parallèles, perpendiculaires à l'axe X-X du joint d'étanchéité selon l'invention (Fig. 2).

Selon une caractéristique avantageuse de l'invention, la face interne 14 de la garniture d'étanchéité G est d'un diamètre interne minimal <u>di</u> inférieur au diamètre externe D1 du bout mâle 1. Par ailleurs, la face externe 15 de la garniture G est d'un diamètre maximal <u>de</u> supérieur au diamètre d3 de la face 11 d'emboîtement 2.

En pratique, le diamètre <u>di</u> de la face 14 de la garniture G est tel que la garniture G, une fois posée sur la face externe du bout mâle 1, présente un allongement de 2 % dans le cas d'une valeur minimale du diamètre D1 du bout mâle 1, le diamètre externe du bout mâle 1 pouvant varier, compte tenu des tolérances de fabrication en fonderie, d'une valeur maximale Dmax à une valeur minimale Dmin. Ainsi, pour un diamètre minimal Dmin du bout mâle 1, le diamètre de la garniture d'étanchéité G est égal à 0,98 Dmin.

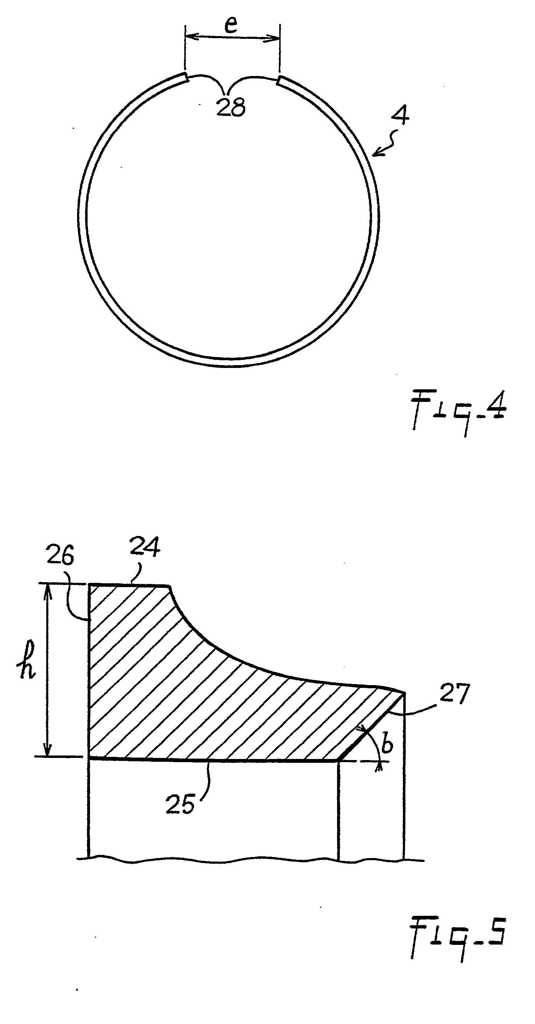

Comme on le voit Fig. 1 et Fig. 3, la bague 3, qui en pratique est réalisée en fonte, présente une section méridienne globalement rectangulaire ou carrée. Cette bague 3 présente ainsi une face externe 19, de diamètre d5 inférieur au diamètre d3 de la face 11 de l'emboîtement 2, cylindrique d'axe X-X, parallèle à une face interne 21 cylindrique d'axe X-X, de diamètre d6 supérieur au diamètre maximal du bout uni 1. Ces deux faces 19 et 21 sont reliées par des faces planes 20 et 22 respectivement situées du côté de la face 12 du fond de l'emboîtement 2 et du côté du collet 5 de l'ouverture de l'emboîtement 2.

Comme on le voit Fig. 1 et Fig. 3, les faces 22 et 19 de la bague 3 sont reliées par une face tronconique 23, divergente vers le fond de l'emboîtement 2, faisant un angle a d'environ 70° par rapport à l'axe X-X.

La bague 3 peut être constituée d'un anneau complet ou d'un anneau ouvert présentant une ouverture pouvant être ensuite refermée par addition d'une pièce élastique ou métallique non représentée.

Enfin, comme on le voit Fig. 4, la contre-bride 4 est constituée d'un anneau ouvert incomplet. Cette contre-bride 4 présente une face externe 24, cylindrique d'axe X-X, d'un diamètre correspondant au diamètre d2 de la face 9 de l'emboîtement 2 et une face interne 25 cylindrique de diamètre inférieur au diamétre externe d5 de la face 19 de la bague 3.

Ces deux faces 24 et 25 de la contre-bride interne 4 sont reliées, côté ouverture de l'emboîtement, par une face plane 26 destinée à venir en appui sur la face 8 du collet 5 de l'emboîtement 2.

La face 25 est prolongée, côté fond de l'emboîtement 2, par une face 27 tronconique, divergente vers le fond de l'emboîtement 2, faisant un angle b avec l'axe X-X, correspondant à l'angle a de la face 23 de la bague 3. Cet angle b est donc fixé en pratique à environ 70°.

Comme on le voit Fig. 4, la contre-bride interne 4 est constituée d'un anneau ouvert incomplet présentant deux faces radiales d'extrémité 28. L'élasticité de cette contre-bride interne est suffisante pour obtenir un diamètre variable de ladite contre-bride. Par ailleurs, la hauteur h de la face 26 est inférieure à la hauteur de l'ouverture, constituée par la face externe du bout mâle 1 et la face interne 7 du collet 5, dans le cas d'un emboîtement de diamètre interne minimum et d'un bout mâle de diamètre externe maximum. Par ailleurs, l'écartement e des deux faces d'extrémité 28 de la contre-bride interne 4 est suffisant pour que, lorsque les deux faces 28 sont en contact, le diamètre externe de la contre-bride 4, constitué par la face 24, soit inférieur au diamétre d1 de la face 7 de l'emboîtement 2.

Enfin, des moyens d'écartement, désignés sous la référence générale F, des faces radiales d'extrémité 28 de la contre-bride interne 4 sont prévus de façon à permettre un contact parfait de la face externe 24 de la contre-bride interne 4 contre la face interne 9 de l'emboîtement 2.

Comme on le voit Fig. 6, ces moyens F d'écartement et de maintien des faces d'extrémité 28 sont constitués de deux pièces 29 indentiques en forme de G enserrant le collet 5 de l'emboîtement 2.

Ces deux pièces 29 sont ainsi constituées d'une partie supérieure 30, grossièrement parallèle à l'axe X-X, d'une partie verticale 31 perpendiculaire à l'axe X-X en en appui sur la face 6 de l'emboîtement 2, d'une partie inférieure 32 grossièrement parallèle à l'axe X-X et de longueur supérieure à la longueur axiale de la face 7 de l'emboîtement 2, cette partie inférieure étant poursuivie vers le haut, du côté du fond de l'emboîtement, par une partie verticale 33 de hauteur p supérieure à la hauteur q de la face 8 du collet 5.

Chaque pièce 29 présente par ailleurs deux faces planes parallèles 34.

Un trou fileté vertical 35 est ménagé dans la partie supérieure 30 de chaque pièce 29 permettant la pose d'un écrou 36 venant s'appliquer sur une face 37 de l'extrémité de l'emboîtement 2.

Montage:

Après avoir fait glisser, à partir de l'extrémité du bout mâle 1 du tuyau T1, la contre-bride interne 4 puis la bague 3 et enfin la garniture G sur la face externe dudit bout mâle 1, le bout mâle 1 est introduit dans l'emboîtement, la garniture G, la bague métallique 3 et la contre-bride interne 4 n'étant pas encore introduites dans ledit emboîtement 2.

Puis, par un dispositif simple, non représenté, la garniture G, qui présente déjà un allongement d'au moins 2 %, est introduite dans son logement constitué par la face externe du bout mâle 1, la face 12 du fond de l'emboîtement 2 et la face 11 de l'emboîtement 2.

Ensuite la bague métallique 3 est introduite au fond de l'emboîtement, la face 20 de ladite bague 3 venant en contact avec la face 16 de la garniture G. Si la bague 3 est constituée d'un anneau fendu, une pièce de fermeture de cet anneau est alors posée, la bague 3 étant alors constituée d'un anneau complet fermé.

Enfin, la contre-bride 4 est rétreinte sur la face externe du bout mâle 1, par un dispositif non représenté, et introduite dans l'emboîtement 2 par l'ouverture constituée par la face 7 du collet 5 et la face externe du bout mâle 1. Le dispositif permettant de rétreindre la contre-bride 4 peut être constitué d'un simple câble tendu sur la face externe de la contre-bride 4.

Puis, un fois que la face 26 de la contre-bride 4 a dépassé, dans le sens axial, la face 8 du collet 5, la contre-bride 4 est libérée. Par l'élasticité naturelle de la contre-bride 4, les faces 24 et 26 de la contre-bride 4 viennent respectivement en contact avec les faces internes 8 et 9 de l'emboîtement 2.

Enfin, pour permettre un maintien efficace et permanent de la contre-bride 4 dans cette position, les deux pièces de verrouillage 29 sont mises en place, chaque partie 31 de chaque pièce 29 venant en contact avec la face 6 d'extrémité du collet 5 de l'emboîtement 2.

La contre-bride 4 présentant deux faces radiales d'extrémité 28 sur lesquelles chaque pièce de verrouillage 29 vient s'appuyer par une de ses faces latérales 34, la face latérale droite (respectivement gauche) de la pièce de verrouillage de droite (respectivement de gauche) est en contact avec la face radiale d'extrémité 28 de droite (respectivement de gauche) de la contre-bride interne 4.

Pour éviter un resserrement de la contre-bride interne 4, par rapprochement de ses deux faces radiales d'extrémité 28, les pièces de verrouillage 29 sont maintenues dans leur position par les vis 36 venant en appui sur la face 37 de l'emboîtement 2. Chaque vis 36 et chaque partie 33 d'une pièce de verrouillage 29 jouent ainsi le rôle de mâchoires en enserrant l'extrémité de l'emboîtement 2 constituée par les faces 37, 6, 7 et 8.

Une fois les pièces de verrouillage 29 bloquées par les vis 36 et par leur appui sur la face 9 de l'emboîtement 2, la contre-bride interne 4, en contact par sa face 24 contre la face 9 de l'emboîtement 2, ne peut plus se resserrer, le montage du joint d'étanchéité selon l'invention est alors achevé.

Fonctionnement:

Lors de la mise en service de la canalisation, le fluide sous pression circulant dans cette canalisation tend à expulser la garniture d'étanchéité G en dehors de son logement vers l'extrémité de l'emboîtement 2.

La garniture G pousse alors la bague métallique 3 qui vient alors en appui par sa face tronconique 23 contre la face tronconique correspondante 27 de la contre-bride interne 4. Une fois ce contact réalisé, tout mouvement de la garniture G vers l'extrémité de l'emboîtement constituée par le collet 5 est impossible.

Avantages:

Le joint selon la présente invention permet donc de réaliser de façon simple un joint d'étanchéité pour tuyaux de grand diamètre dont la pose sur chantier est simple et ne nécessite pas l'utilisation de brides vissées sur l'emboîtement, ce joint d'étanchéité évitant par ailleurs l'expulsion de la garniture d'étanchéité hors de l'emboîtement.

**Revendications**

1. Joint d'étanchéité pour le raccordement d'un élément de canalisation (T1), d'axe X–X, à bout mâle (1) avec un autre élément de canalisation (T2) à emboîtement (2), d'axe X–X, du type à garniture d'étanchéité (G) à compression radiale interposée entre la surface externe dudit bout mâle (1) et la surface interne dudit emboîtement (2), le joint d'étanchéité comportant, à l'intérieur de l'emboîtement (2), une bague métallique (3), placée autour du bout mâle (1), en appui, par une face latérale (23) située du côté de l'emboîtement (2), sur une contre-bride métallique interne (4) elle-même en appui sur une face interne (26, 24) du nez de l'emboîtement (2), la garniture d'étanchéité (G) s'appuyant sur une face latérale (20) de la bague métallique (3) située du côté du fond de l'emboîtement (2), caractérisé en ce que la contre-bride métallique interne (4) est fendue, des moyens d'écartements (F) des faces radiales d'extrémité (28) de la contre-bride interne (4) maintenant une face externe (24) de la contre-bride interne (4) contre une face interne (9) de l'emboîtement (2).

2. Joint d'étanchéité selon la revendication 1 caractérisé en ce que la garniture d'étanchéité (G) est d'un diamètre interne (di) égal à 0,98 Dmin, Dmin étant le diamètre externe minimal du bout mâle (1).

3. Joint d'étanchéité selon la revendication 1, caractérisé en ce que la bague métallique (3) présente, du côté de l'ouverture de l'emboîtement (2), une face tronconique (23), divergente vers le fond dans l'emboîtement, faisant un angle (a), avec l'axe X–X.

4. Joint d'étanchéité selon la revendication 1 caractérisé en ce que la contre-bride interne (4) présente, du côté du fond de l'emboîtement (2), une face tronconique (27), divergente vers le fond de l'emboîtement (2), faisant un angle (b) avec l'axe X–X.

5. Joint d'étanchéité selon les revendications 3 et 4 caractérisé en ce que l'angle (a), de la face tronconique (23) par rapport à l'axe X–X, est égal à l'angle (b) de la face tronconique (27) par rapport à l'axe X–X.

6. Joint selon la revendication 5 caractérisé en ce que l'angle (a) de la face tronconique (23) par rapport à l'axe X–X est égal à 70°.

7. Joint d'étanchéité selon la revendication 1 caractérisé en ce que la garniture d'étanchéité (G) présente un allongement d'au moins 2%.

**Patentansprüche**

1. Abdichtung für die Verbindung eines Rohrelementes (T1) mit Achse X–X, mit männlichem Ende (1) mit einem anderen Rohrelement (T2) mit Einlassung (2) mit Achse X–X vom Typ mit Dichtungsgarnitur (G) mit radialer Kompression, die zwischen der Außenfläche des männlichen Teils (1) und der Innenfläche der Einlassung (2) eingebracht ist, wobei die Abdichtung im Inneren der Einlassung (2) einen Metallring (3) aufweist, der um das männliche Stück (1) in Anschlag über eine Seitenfläche (23) angeordnet ist, die auf der Seite der Einlassung (2) angeordnet ist, auf einem inneren metallischen Gegenflansch (4), der selbst in Anschlag ist auf eine Innenseite (26, 24) der Einlassungsnase (2), wobei die Dichtungsgarnitur (G) sich auf der Seitenfläche (20) des Metallringes (30) abstützt, der auf der Seite des Einlassungsbodens (2) angeordnet ist, dadurch gekennzeichnet, daß der innere metallische Gegenflansch (4) geschlitzt ist, wobei Sprengeinrichtungen (F) der radialen Endseiten (28) des inneren Gegenflansches (4) eine Außenseite (24) des inneren Gegenflansches (4) gegen eine innere Seite (9) der Einlassung (2) halten.

2. Abdichtung nach Anspruch 1, dadurch gekennzeichnet, daß die Dichtungsgarnitur (G) einen inneren Durchmesser (di) aufweist, der gleich 0,98 Dmin ist, wobei Dmin der minimale äußere Durchmesser des männlichen Endes (1) ist.

3. Abdichtung nach Anspruch 1, dadurch gekennzeichnet, daß der Metallring (3) auf der Seite der Öffnung der Einlassung (2) eine Kegelstumpfseite (23) aufweist, die zum Boden der Einlassung hin divergiert, unter Bildung eines Winkels (a) mit der Achse X–X.

4. Abdichtung nach Anspruch 1, dadurch gekennzeichnet, daß der innere Gegenflansch (4) auf der Seite der Einlassung (2) eine Kegelstumpfseite (27) aufweist, die zum Boden der Einlassung (2) hin divergiert unter Bildung eines Winkels (b) mit der Achse X–X.

5. Abdichtung nach den Ansprüchen 3 und 4, dadurch gekennzeichnet, daß der Winkel (a) der Kegelstumpfseite (23) bezüglich der Achse X–X gleich dem Winkel (b) der Kegelstumpfseite (37) bezüglich der Achse X–X ist.

6. Abdichtung nach Anspruch 5, dadurch gekennzeichnet, daß der Winkel (a) der Kegelstumpfseite (23) bezüglich der Achse X–X gleich 70° ist.

7. Abdichtung nach Anspruch 1, dadurch gekennzeichnet, daß die Dichtungsgarnitur (G) eine Dehnung von wenigstens 2% aufweist.

## Claims

1. Seal for connecting a pipe section (T1), on the axis X–X, having a male end (1), to another pipe section (T2) having a socket (2), on the axis X–X, of the type comprising a radially compressed gasket (G) interposed between the outer surface of the said male end (1) and the inner surface of the said socket (2), the seal comprising, inside the socket (2), a metal ring (3), disposed around the male end (1), abutting, by a side face (23) situated adjacent the socket (2), an internal metal mating flange (4) itself abutting an internal surface (26, 24) of the lip of the socket (2), the gasket (G) abutting a side face (20) of the metal ring (3) situated adjacent the base of the socket (2), characterised in that the internal metal mating flange (4) is split, means (F) for spreading the radial end surfaces (28) of the internal mating flange (4) keeping an outer surface (24) of the internal mating flange (4) against an inner surface (9) of the socket (2).

2. Seal according to Claim 1, characterised in that the gasket (G) has an internal diameter (di) equal to 0.98 Dmin, Dmin being the minimum outer diameter of the male end (1).

3. Seal according to Claim 1, characterised in that the metal ring (3) comprises, adjacent the opening of the socket (2), a frustoconical face (23), diverging towards the base of the socket, forming an angle (a) with the axis X–X.

4. Seal according to Claim 1, characterised in that the internal mating flange (4) comprises, adjacent the base of the socket (2), a frustoconical face (27) diverging towards the base of the socket (2), forming an angle (b) with the axis X–X.

5. Seal according to Claims 3 and 4, characterised in that the angle (a) of the frustoconical face (23) with respect to the axis X–X is equal to the angle (b) of the frustoconical face (27) with respect to the axis X–X.

6. Seal according to Claim 5, characterised in that the angle (a) of the frustoconical face (23) with respect to the axis X–X is equal to 70°.

7. Seal according to Claim 1, characterised in that the gasket (G) is elongated by at least 2%.

Fig-1

$Fig.2$

$Fig.3$

$Fig.6$

*Fig-4*

*Fig-5*